# EUROPÄISCHE PATENTSCHRIFT

(11) **EP 0 490 064 B1**
(45) Veröffentlichungstag und Bekanntmachung des Hinweises auf die Patenterteilung: **20.07.1994**
(21) Anmeldenummer: 91117898.6
(22) Anmeldetag: 21.10.1991
(51) Int. Cl.: A63C 9/00

(54) **Ski**
Ski
Ski

(30) Priorität: 14.12.1990 AT 2548/90
(43) Veröffentlichungstag der Anmeldung: 17.06.1992
(73) Patentinhaber: HTM Sport- und Freizeitgeräte Aktiengesellschaft, A-2320 Schwechat (AT)
(72) Erfinder: Mayr, Bernhard, Dr., A-6971 Hard (AT); Umlauft, Helmut, A-6971 Hard (AT)
(74) Vertreter: Szász, Tibor, Dipl.-Ing.

(56) Entgegenhaltungen:
- EP-A- 0 354 379
- FR-A- 2 431 868
- GB-A- 572 218
- US-A- 3 766 636

## Beschreibung

Die Erfindung betrifft einen Ski gemäß dem Oberbegriff des Anspruches 1 und des Anspruches 7.

Ein solcher Ski ist beispielsweise aus der EP-A2 0354 379 bekannt und hat sich auch in der Praxis bewährt. Bei dieser bekannten Lösung ist der Aufnahmeteil für die Befestigungsschrauben als flaches längliches Plättchen ausgebildet und im Kern des Ski in einem Abstand von dessen oberer Deckschicht angeordnet. Dadurch hat sich das Problem ergeben, daß die in der Skibindung schon werkseitig vormontierten Befestigungsschrauben für die Montage auf einem solchen bekannten Ski zu kurz sind und vom Bindungsmonteur gegen längere, speziell gefertigte Schrauben ausgetauscht werden müssen. Das bedeutet einerseits einen zusätzlichen Arbeitsaufwand für den Bindungsmonteur und birgt andererseits die Gefahr von Verwechslungen der richtigen Wahl der Schrauben in sich. Außerdem ist bei der bekannten Lösung die genaue Höhenlage des elastisch gelagerten Aufnahmeteiles von Fertigungstoleranzen abhängig, was gegebenenfalls zu Montageproblemen führen könnte.

Die Erfindung stellt sich die Aufgabe, diese Probleme zu lösen und einen Ski der eingangs genannten Art so auszugestalten, daß für die Montage die Originalbefestigungsschrauben der Skibindung verwendet werden können, und gleichzeitig ein sicherer Halt der Befestigungsschrauben in den jeweiligen festen Aufnahmeteilen gewährleistet ist.

Diese Aufgabe wird erfindungsgemäß durch die kennzeichnenden Merkmale des Anspruches 1 gelöst. Dadurch, daß jeder Aufnahmeteil zumindest einen nach oben gekröpften Abschnitt aufweist, ist sichergestellt, daß die Befestigungsschrauben ausreichend tief in dem Aufnahmeteil verankert werden können. Dadurch, daß sich der nach oben gekröpfte Abschnitt des Aufnahmeteiles im montierten Zustand bis zur Unterseite der oberen Deckschicht des Ski erstreckt, ist ein genau definierter Abstand von der Skioberseite gewährleistet. Außerdem ergibt sich dadurch der Vorteil, daß während des Herstellungsprozesses des Ski die genaue Höhenposition des Aufnahmeteiles leicht überwacht werden kann.

Die Unteransprüche betreffen vorteilhafte Ausgestaltungen des Erfindungsgegenstandes. Dabei ist es aus der DE-A1 39 34 888 bereits bekannt, eine Schraubenbuchse so in einen im Ski versenkten Dämpfungsstopfen einzusetzen, daß der obere Endabschnitt der Schraubenbuchse über die Oberseite des Ski hinaussteht. Dabei kann auch das Material des Dämpfungsstopfens zusätzlich als Dämpfungsschicht auf der Oberseite des Ski angeordnet sein.

In der DE-A1 37 05 507 ist ein Ski mit werkseitig vorgebohrten Montagelöchern geoffenbart, bei welchem diese Montagelöcher durch eine auf der Skioberseite angebrachte Folie verschlossen sind, wobei gegebenenfalls Markierungen auf der Schutzfolie die darunter liegenden Montagelöcher erkennen lassen.

Die US-PS 25 26 137 zeigt einen Ski, in dem zwischen einer oberen und einer unteren festen Schicht eine sich über die ganze Skilänge erstreckende dicke Gummischicht angeordnet ist, welche den Ski gespannt halten soll. Diese bekannten Lösungen liegen allerdings weiter entfernt als der bereits berücksichtigte Stand der Technik.

Die Merkmale des Anspruches 2 ermöglichen einen sicheren Halt des Distanzelementes während der Fertigung und während des Transports des Ski und bei der Bindungsmontage.

Die Ausgestaltung nach den Merkmalen des Anspruches 3 ermöglicht eine einfache Anpassung der Skibindungsposition an verschiedene Schuhgrößen.

Durch die Maßnahmen des Anspruches 4 erkennt einerseits der Bindungsmonteur leicht die korrekte Schraubenposition und andererseits wird durch die Abdeckung das Skiinnere gegen Verschmutzung und Witterungseinflüsse von außen geschützt.

Der Gegenstand des Anspruches 5 dient ebenfalls der Abdichtung und gleichzeitig dem Schutz der empfindlichen Skioberfläche im Skibindungsmontagebereich.

Die Maßnahme des Anspruches 6 schützt den Skikern noch zusätzlich gegen das Eindringen von Feuchtigkeit.

In Anspruch 7 ist eine besonders einfache Ausführungsvariante mit wenigen Bauteilen geschützt.

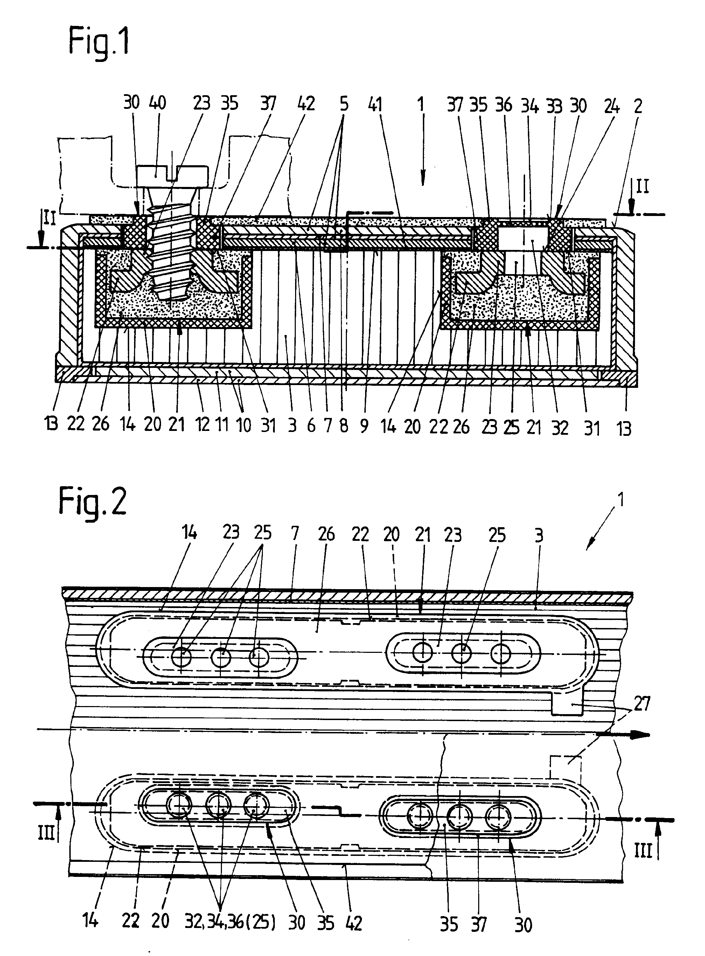

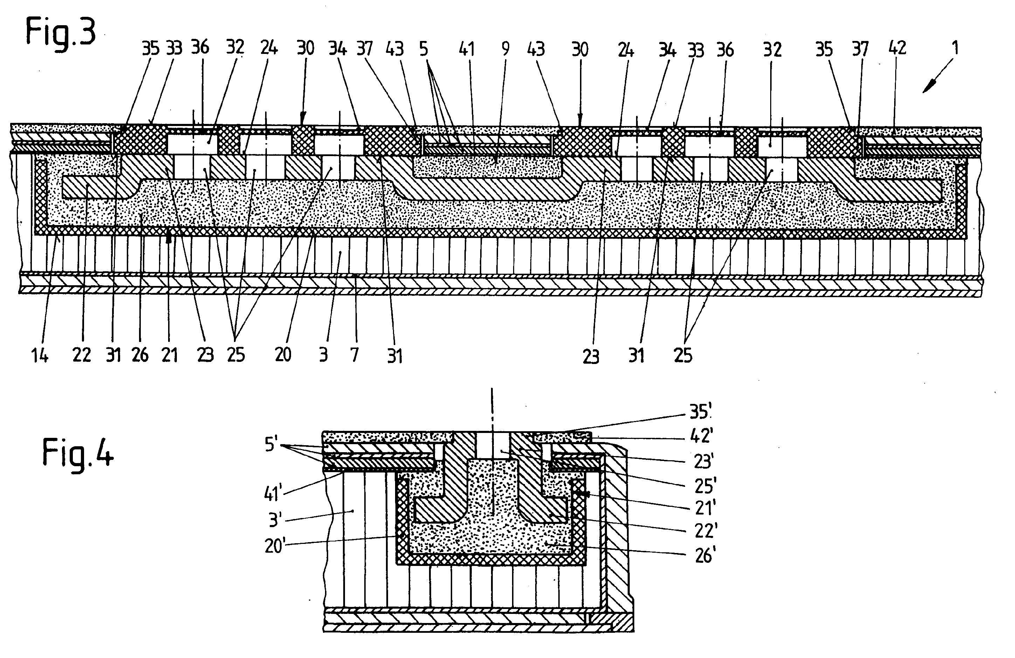

Weitere Vorteile und Einzelheiten des erfindungsgemäßen Ski werden nun anhand der Zeichnung erläutert. Dabei zeigen Fig.1 einen Querschnitt durch den Ski mit eingesetztem Aufnahmteil, Fig.2 eine Draufsicht auf einen Teil des Ski teilweise geschnitten nach der Linie II-II aus Fig.1, Fig.3 einen entsprechenden Längsschnitt nach der Linie III-III der Fig.2 und Fig.4 eine zweite Ausführungsvariante in einer der Fig.1 ähnlichen Darstellung.

In Fig.1 ist ein Ski 1 erkennbar, welcher eine Oberseite 2, einen Kern 3 und je eine obere und untere Deckschicht 5,10 aufweist. Dabei setzt sich im dargestellten Ausführungsbeispiel die obere Deckschicht 5 aus einer Metallschicht 6, einem glasfaserverstärkten Laminat 7 und einem Oberflächenbelag 8 zusammen. Das glasfaserverstärkte Laminat 7 ist seitlich und nach unten zu einem sogenannten Torsionskasten verlängert und bildet auch einen Teil der unteren Deckschicht 10, welche außerdem eine Metallschicht 11, einen Laufflächenbelag 12 und Stahlkanten 13 aufweist. Der Aufbau eines derartigen Ski 1 ist an sich bekannt und bildet keinen Gegenstand der Erfindung.

Im Kern 3 des Ski 1 sind zwei nach oben hin offene etwa parallel und symmetrisch zur Längsachse des Ski angeordnete Nuten 14 ausgespart, in welche Behälter 20 eingesetzt sind, die gleichfalls nach oben hin offen sind. In jeden Behälter 20 ist ein etwa streifenförmiger Aufnahmeteil 21 eingesetzt. Der Aufnahmeteil 21 setzt sich aus einem Halteteil 22 aus festem Material (beispielsweise Metall,Kunststoff oder aus einem Metallkunststoffverbund) und einer diesen umgebenden Hülle 26 aus elastomerem Material zusammen. Die Hülle 26 kann Aussparungen, wie beispielsweise Löcher, Nuten oder halbkugelförmige Hohlräume, aufweisen, um deren Verformbarkeit noch weiter zu erhöhen. Eine derartige Ausgestaltung ist für sich bekannt und wird daher hier nicht näher beschrieben. Die Halteteile 22 weisen längliche, nach oben gekröpfte Abschnitte 23 auf. Die Oberseite jedes nach oben gekröpften Abschnittes 23 ist als Abstützfläche 24 ausgebildet und weist Bohrungen 25 für Befestigungsschrauben 40 auf. Wie in Fig.1 und auch in Fig.3 erkennbar, fluchten die Aufnahmeteile 21 mit dem Kern 3, wobei sich die nach oben gekröpften Abschnitte 23 bis zur Unterseite 9 der oberen Deckschicht 5 erstrecken. Dabei ist die Hülle 26 aus elastomerem Material so dimensioniert, daß die Halteteile 22 etwas nach oben gedrückt werden.

Distanzelemente 30 liegen auf jedem Aufnahmteil 21 auf und sind mit diesem verklebt. Dabei kann noch eine zwischen Kern 3 und oberer Deckschicht 5 angeordnete dünne elastische Einlage 41 vorgesehen sein, welche sowohl mit dem Kern 3 als auch mit der oberen Deckschicht 5 verklebt ist. Diese Einlage 41 schützt den Kern 3 gegen das Eindringen von Feuchtigkeit. Jedes Distanzelement 30 durchsetzt mit seinem unteren Bereich 37 die obere Deckschicht 5 mit einem geringfügigen Spiel und ragt mit seinem gestuften Endabschnitt 35 über die Oberseite 2 des Ski 1 vor. An seiner Unterseite 31 hat jedes Distanzelement 30 eine oder mehrere sacklochartige Ausnehmungen 32. An der Oberseite 33 jedes Distanzelementes 30 ist über jeder Ausnehmung 32 eine entsprechende Markierung 34 angebracht. Dabei bleibt zwischen der Ausnehmung 32 und der Markierung 34 eine dünne Verschlußschicht 36 stehen. Diese eben genannten Details sind besonders in der rechten Hälfte der Fig.1 erkennbar, wo der Ski 1 im verkaufsfertigen Zustand gezeigt ist. Die linke Hälfte der Fig.1 zeigt den Ski 1 mit eingesetzter Befestigungsschraube 40, wobei der zu befestigende Skibindungsteil nur angedeutet ist. Hier ist erkennbar, daß die Befestigungsschraube 40 bei der Bindungsmontage die Verschlußschicht 36 durchdringt, die sacklochartige Ausnehmung 32 durchsetzt und im Halteteil 22 fest gehalten ist. Ein Vergleich der rechten mit der linken Seite der Fig.1 zeigt weiters, daß die Bohrung 25 im nach oben gekröpften Teil 23 des Halteteiles 22 einen Durchmesser hat, der etwa dem Kerndurchmesser der Befestigungsschraube 40 entspricht. Fig.1 zeigt weiters eine an der Oberseite 2 des Ski 1 im Bindungsmontagebereich angebrachte elastische Folie 42, welche die über die Oberseite 2 des Ski 1 ragenden Bereiche der Distanzelemente 30 umschließt, wobei dafür in der Folie 42 genau passende Öffnungen 43 vorgesehen sind, und welche somit das Eindringen von Schmutz und Feuchtigkeit verhindert.

In Fig.2 ist die Anordnung der Aufnahmeteile 21 im Ski 1 zu sehen. Dabei erkennt man, daß jeder Halteteil 22 zwei nach oben gekröpfte Abschnitte 23 hat, von denen einer zur Längsachse des Ski 1 hin versetzt ist. Diese Anordnung entspricht dem Bohrbild eines Vorderbackens, wobei man sich die Skispitze in der Verlängerung der Zeichnung rechts, also in Richtung des Pfeiles, vorzustellen hat. Selbstverständlich kann je nach dem gewünschten Bindungstyp eine andere Anordnung der nach oben gekröpften Abschnitte gewählt werden. In dem gewählten Ausführungsbeispiel ist jeder nach oben gekröpfte Abschnitt 23 mit drei Bohrungen 25 versehen. Die Abstände zwischen den Achsen zweier Bohrungen 25 entsprechen dabei ungefähr dem Längenunterschied zwischen zwei Skischuhsohlengrößen. Dadurch ist es möglich, die Bindung je nach Schuhgröße weiter vorne oder hinten zu montieren. Natürlich wäre es auch möglich, mehrere Bohrungen vorzusehen, dies ist aber wegen der erfahrungsgemäß bestehenden Korrelation zwischen Körpergröße und damit Skilänge einerseits und Schuhgröße andererseits nicht erforderlich.

Um eine präzise Anordnung der Aufnahmeteile 21 im Ski 1 und ein genaues Fluchten der Achsen der Markierungen 34 der Distanzelemente 30 mit jenen der Bohrungen 25 der Halteteile 22 zu erreichen, werden während der Fertigung des Ski 1 in die vorbereiteten Nuten 14 zunächst die Behälter 20 und die Aufnahmeteile 21 eingesetzt, letztere noch ohne Bohrungen in den nach oben gekröpften Abschnitten 23 der Halteelemente 22. In Fig.2 erkennbare seitliche Lappen 27 dienen dem Arbeiter dabei als Orientierungshilfe. Dann wird die dünne elastische Einlage 41 aufgebracht. Anschließend wird der Ski 1 durch Anbringen der Deckschichten 5 und 10 fertiggestellt. Der nun fertige Ski 1 wird erneut in eine Vorrichtung eingespannt, wonach in unmittelbar aufeinanderfolgenden Arbeitsgängen für die Distanzelemente 30 passende Öffnungen in die obere Deckschicht 5 gefräst, die Bohrungen 25 in die nach oben gekröpften Abschnitte 23 gebohrt und die Distanzelemente 30 eingeklebt werden. Anschließend wird die elastische Folie 42 aufgeklebt.

In Fig.4 ist eine zweite Ausführungsform dargestellt, wobei hier nur die von der ersten Ausführungsform abweichenden Details beschrieben werden. Der nach oben gekröpfte Abschnitt 23′ des Halteteiles 22′ ist bei dieser Variante höher ausgebildet, durchsetzt die obere Deckschicht 5′ und erstreckt sich bis über die Oberseite 2′ des Ski 1′. Der nach oben gekröpfte Abschnitt 23′ des Halteteiles 22′ hat einen gestuften Endabschnitt 35′, der als Auflagefläche für die Grundplatte einer Skibindung dient.

## Patentansprüche

1. Ski (1), bestehend aus einem Kern (3) und mindestens einer oberen (5) und einer unteren (10) Deckschicht, wobei an der Oberseite des Kerns (3) Nuten (14) ausgespart sind, in deren jede wahlweise ein nach oben offener Behälter (20) eingesetzt ist, welcher einen streifenförmigen Aufnahmeteil (21) für Befestigungsschrauben (40) einer Skibindung enthält, welcher Aufnahmeteil (21) aus einem Halteteil (22) aus einem festen Material, vorzugsweise Metall, und aus einer diesen zumindest teilweise umgebenden Hülle (26) aus elastomerem Material zusammengesetzt ist, auf welchem Aufnahmeteil (21) zumindest ein Distanzelement (30) aufsitzt, welches die obere Deckschicht (5) des Ski (1) durchsetzt, über die Oberseite (2) des Ski (1) vorsteht und zur Auflage der Grundplatte der Skibindung sowie zur Aufnahme einer Befestigungsschraube (40) dient, dadurch gekennzeichnet, daß jeder Halteteil (22) zumindest einen nach oben gekröpften Abschnitt (23) aufweist, der sich im montierten Zustand des Halteteiles (22) mindestens bis zur Unterseite (9) der oberen Deckschicht (5) des Ski (1) erstreckt.

2. Ski nach Anspruch 1, dadurch gekennzeichnet, daß der nach oben gekröpfte Abschnitt (23) des Halteteiles (22) eine Abstützfläche (24) für das Distanzelement (30) aufweist, und daß das Distanzelement (30) mit dieser Abstützfläche (24) verbunden, beispielsweise verklebt, ist, wobei vorzugsweise in jedem nach oben gekröpften Abschnitt (23) des Halteteiles (22) zumindest eine Bohrung (25) vorgesehen ist, deren Durchmesser kleiner ist als der Außendurchmesser der Befestigungsschraube (40), und vorzugsweise dem Kerndurchmesser der Schraube (40) entspricht.

3. Ski nach Anspruch 2, dadurch gekennzeichnet, daß die Längserstreckung des nach oben gekröpften Abschnittes (23) des Halteteiles (22) größer als die Breitenerstreckung ist, und daß in jedem nach oben gekröpften Abschnitt (23) zwei oder mehr Bohrungen (25) in der Längsrichtung des Ski (1) im Abstand voneinander angeordnet sind.

4. Ski nach Anspruch 2 und 3, dadurch gekennzeichnet, daß jedes Distanzelement (30) an seiner Unterseite (31) mindestens eine sacklochartige Ausnehmung (32) aufweist, deren Achse jeweils mit der Achse der Bohrung (25) im gekröpften Abschnitt (23) des Halteteiles (22) fluchtet, und daß an der Oberseite (33) jedes Distanzelementes (30) die Ausnehmungen (32) kennzeichnende Markierungen (34) angebracht sind.

5. Ski nach einem der Ansprüche 1,2 oder 4, dessen Distanzelement stufenförmig ausgebildet ist und mit dem gestuften Endabschnitt über die Oberseite des Ski vorsteht, dadurch gekennzeichnet, daß auf der Oberseite (2) des Ski (1) eine an sich bekannte elastische Folie (42) angeordnet ist, welche von dem Endabschnitt (35) durchsetzt ist und diesen eng umschließt.

6. Ski nach Anspruch 1, dadurch gekennzeichnet, daß zwischen dem Kern (3) und der oberen Deckschicht (5) des Ski (1) im Bereich der Aufnahmeteile (21) eine dünne elastische Einlage (41) angebracht, vorzugsweise auf dem Kern (3) aufgeklebt, ist, welche elastische Einlage (41) ebenfalls von dem bzw. den Distanzelement(en) (30) durchsetzt ist.

7. Ski (1′), bestehend aus einem Kern (3′) und mindestens einer oberen (5′) und einer unteren (10′) Deckschicht, wobei an der Oberseite des Kerns (3′) Nuten (14′) ausgespart sind, in deren jede ein streifenförmiger Aufnahmeteil (21′) für Befestigungsschrauben (40′) einer Skibindung eingesetzt ist, welcher Aufnahmeteil (21′) aus einem Halteteil (22′) aus einem festen Material, vorzugsweise Metall, und aus einer diesen zumindest teilweise umgebenden Hülle (26′) aus elastomerem Material zusammgesetzt ist, wobei in jeder Nut (14′) ein nach oben offener Behälter (20′) eingesetzt ist, dadurch gekennzeichnet, daß jeder Halteteil (22′) zumindest einen nach oben gekröpften Abschnitt (23′) aufweist, welcher nach oben gekröpfte Abschnitt (23′), wie an sich bekannt, im montierten Zustand des Halteteiles (22′) die obere Deckschicht (5′) des Ski (1′) durchsetzt, über die Oberseite (2′) des Ski (1′) vorsteht und zur Auflage einer Grundplatte der Skibindung sowie zur Aufnahme der Befestigungsschrauben für die Skibindung dient.

## Claims

1. A ski (1), consisting of a core (3) and at least an upper (5) and a lower (10) cover layer, the top face of said core (3) being formed with grooves (14) each having selectively an upwards opening receptacle (20) inserted thereinto, said receptacle (20) containing a strip-shaped receiver member (21) for cooperation with fastener screws (40) of a ski binding, said receiver member (21) being composed of a retainer piece (22) made of a solid material, preferably metal, and an envelope (26) of an elastomeric material at least partly enclosing said retainer piece (22), said receiver member (21) supporting thereon at least one spacer element (30) extending through said upper cover layer (5) of said ski (1) to project above the top face (2) of the ski (1) to act as a support for a base plate of the ski binding adapted to receive a fastener screw (40) therein, characterized in that each retainer piece (22) is provided with at least one upwards deformed portion (23) which in the mounted state of said retainer piece (22) extends at least to the lower face (9) of said upper cover layer (5) of said ski (1).

2. A ski according to claim 1, characterized in that said upwards deformed portion (23) of said retainer piece (22) is provided with a support surface (24) for said spacer element (30), and that said spacer element (30) is connected, for instance adhesively bonded, to said support surface (24), each of said upwards deformed portions (23) of said retainer piece (22) being preferably formed with at least one bore (25) of a diameter smaller than the outer diameter of said fastener screw (40) and preferably corresponding to the core diameter of said fastener screw.

3. A ski according to claim 2, characterized in that the longitudinal dimension of said upwards deformed portion (23) of said retainer piece (22) is greater than its transverse dimension, and that each of said upwards deformed portions (23) is formed with two or more bores (25) at spaced locations in the longitudinal direction of the ski (1).

4. A ski according to claims 2 and 3, characterized in that each said spacer element (30) is provided at its bottom said with at least one recessed pocket (32) the axis of which is aligned with the axis of a respective bore (25) in said upwards deformed portion (23) of said retainer piece (22), and that the top face (33) of each spacer element (30) carries markings(34) denoting the location of said pockets (32).

5. A ski according to any of claims 1, 2 and 4, wherein said spacer element is formed with a stepped top end portion projecting above the top face of the ski, characterized in that the top face (2) of said ski (1) carries thereon a per se known elastic sheet member (42) having said top end portion (35) extending therethrough so as to tightly enclose it.

6. A ski according to claim 1, characterized in that at the locations of said receiver members (21) a thin elastic inlay (41) is disposed between said core (3) and said upper cover layer (5) of the ski (1), said elastic inlay (41) being preferably adhesively bonded to said core (3) and having said spacer element, or elements (30), respectively, extending therethrough.

7. A ski (1′), consisting of a core (3′) and at least an upper (5′) and a lower (10′) cover layer, the top face of said core (3′) being formed with grooves (14′) each having a strip-shaped receiver member (21′) for fastener screws (40′) of a ski binding mounted therein, said receiver member (21′) being composed of a retainer piece (22′) of a solid material, preferably metal, and an envelope (26′) of an elastomeric material at least partially enclosing said retainer piece (22′), each said groove (14′) having an upwards opening receptacle (20′) inserted thereinto, characterized in that each said retainer piece (22′) is provided with at least one upwards deformed portion (23′) which in the mounted state of said retainer piece (22′) extends in a per se known manner through said upper cover layer (5′) of the ski (1′) and projects above the top face (2′) of the ski (1′) to act as a support for a base plate of the ski binding and for anchoring the ski binding fastener screws therein.

## Revendications

1. Ski (1) comprenant un noyau (3) et au moins des couches de recouvrement supérieure (5) et inférieure (10), ski dans lequel sont pratiquées, à la face supérieure du noyau (3), des gorges (14) dans chacune desquelles est sélectivement intégré un réceptacle (20) ouvert vers le haut, qui renferme une pièce réceptrice (21) en forme de bande, destinée à des vis d'assujettissement (40) d'une fixation de ski, laquelle pièce réceptrice (21) se compose d'une partie de retenue (22) en un matériau rigide, de préférence en un métal, et d'une enveloppe (26) en un matériau élastomère, entourant au moins partiellement ladite partie, pièce réceptrice (21) sur laquelle repose au moins un élément d'espacement (30) qui traverse la couche de recouvrement supérieure (5) du ski (1), fait saillie au-delà de la face supérieure (2) du ski (1), et sert à conférer un appui à la plaque de base de la fixation de ski, ainsi qu'à recevoir une vis d'assujettissement (40), caractérisé par le fait que chaque partie de retenue (22) présente au moins un tronçon (23) coudé vers le haut et s'étendant, à l'état monté de la partie de retenue (22), au moins jusqu'à la face inférieure (9) de la couche de recouvrement supérieure (5) du ski (1).

2. Ski selon la revendication 1, caractérisé par le fait que le tronçon (23) de la partie de retenue (22), coudé vers le haut, présente une surface d'appui (24) pour l'élément d'espacement (30) ; et par le fait que l'élément d'espacement (30) est relié, par exemple collé à cette surface d'appui (24), ski dans lequel est prévu, de préférence dans chaque tronçon (23) de la partie de retenue (22), coudé vers le haut, au moins un perçage (25) dont le diamètre est plus petit que le diamètre externe de la vis d'assujettissement (40) et correspond, de préférence, au diamètre de l'âme de ladite vis (40).

3. Ski selon la revendication 2, caractérisé par le fait que l'étendue longitudinale du tronçon (23) de la partie de retenue (22), coudé vers le haut, est plus grande que l'étendue en largeur ; et par le fait que deux perçages (25) ou plus sont ménagés, dans chaque tronçon (23) coudé vers le haut, à distance l'un de l'autre dans le sens longitudinal du ski (1).

4. Ski selon les revendications 2 et 3, caractérisé par le fait que chaque élément d'espacement (30) présente, à sa face inférieure (31), au moins un évidement (32) du type trou borgne dont l'axe coïncide, respectivement, avec l'axe du perçage (25) ménagé dans le tronçon coudé (23) de la partie de retenue (22) ; et par le fait que des repères (34) caractérisant les évidements (32) sont façonnés à la face supérieure (33) de chaque élément d'espacement (30).

5. Ski selon l'une des revendications 1, 2 ou 4, dont l'élément d'espacement est de réalisation échelonnée et fait saillie, par la région extrême étagée, au-delà de la face supérieure du ski, caractérisé par le fait qu'une feuille élastique (42) connue par elle-même est disposée sur la face supérieure (2) du ski (1), est traversée par la région extrême (35), et entoure intimement cette dernière.

6. Ski selon la revendication 1, caractérisé par le fait qu'une mince garniture prisonnière élastique (41) est interposée entre le noyau (3) et la couche de recouvrement supérieure (5) du ski (1), dans la région des pièces réceptrices (21), et est de préférence collée sur ledit noyau (3), laquelle garniture prisonnière élastique (41) est pareillement traversée par l' (les) élément(s) d'espacement (30).

7. Ski (1′) comprenant un noyau (3′) et au moins des couches de recouvrement supérieure (5′) et inférieure (10′), ski dans lequel sont pratiquées, à la face supérieure du noyau (3′), des gorges (14′) dans chacune desquelles est intégrée une pièce réceptrice (21′) en forme de bande, destinée à des vis d'assujettissement (40′) d'une fixation de ski, laquelle pièce réceptrice (21′) se compose d'une partie de retenue (22′) en un matériau rigide, de préférence en un métal, et d'une enveloppe (26′) en un matériau élastomère, entourant au moins partiellement ladite partie, un réceptacle (20′) ouvert vers le haut étant intégré dans chaque gorge (14′), caractérisé par le fait que chaque partie de retenue (22′) présente au moins un tronçon (23′) coudé vers le haut qui, de manière connue par elle-même, à l'état monté de la partie de retenue (22′), traverse la couche de recouvrement supérieure (5′) du ski (1′), fait saillie au-delà de la face supérieure (2′) du ski (1′), et sert à conférer un appui à une plaque de base de la fixation de ski, ainsi qu'à recevoir les vis d'assujettissement de la fixation de ski.
